# FASCICULE DE BREVET EUROPEEN

(11) **EP 2 368 087 B1**
(45) Date de publication et mention de la délivrance du brevet: **14.05.2014**
(21) Numéro de dépôt: 09797111.3
(22) Date de dépôt: 27.11.2009
(51) Int. Cl.: F28F 19/01, B01D 29/11, B01D 29/90

(54) **INSTALLATION DE RÉCUPÉRATION D'ÉNERGIE CALORIFIQUE PROVENANT D'EAUX USÉES ET FILTRE A NETTOYAGE AUTOMATIQUE POUR UNE TELLE INSTALLATION**
ABWASSERWÄRMERÜCKGEWINNUNGSANLAGE UND SELBSTREINIGENDER FILTER FÜR EINE SOLCHE ANLAGE
FACILITY FOR RECOVERING HEAT ENERGY FROM WASTEWATER AND SELF-CLEANING FILTER FOR SUCH A FACILITY

(30) Priorité: 28.11.2008 FR 0858138
(43) Date de publication de la demande: 28.09.2011
(73) Titulaire: Domelys Technologies, 69400 Villefranche-sur-Saône (FR); ONSEN, 69400 Villefranche-sur-Saône (FR)
(72) Inventeur: MANOURY, Frédéric, 69480 Anse (FR)
(74) Mandataire: Myon, Gérard Jean-Pierre
(86) Numéro de dépôt international: PCT/FR2009/052324
(87) Numéro de publication internationale: WO 2010/061148

(56) Documents cités:
- WO-A-2007/130029
- DE-A1- 2 625 157
- DE-U1-202006 001 996
- GB-A- 2 342 146
- US-A- 4 602 672
- US-A- 4 690 208

## Description

La présente invention concerne le domaine de la récupération d'énergie calorifique provenant d'eaux usées.

Dans le cadre de l'utilisation d'eau chaude, les eaux usées, issues de l'eau chaude, disposent encore d'une partie significative de l'énergie calorifique initiale. Dans le but de faire usage de cette énergie, il est connu pour des applications domestiques d'utiliser des installations de récupération d'énergie calorifique provenant d'eaux usées qui comprennent un serpentin enroulé autour d'une canalisation d'évacuation des eaux usées. L'eau sanitaire froide circule alors dans le serpentin avant son chauffage par un système chauffe eau ad hoc.

Toutefois, ce type d'installation nécessite d'implanter des moyens d'échange de chaleur à un niveau inférieur par rapport à l'écoulement des eaux usées provenant par exemple d'un lavabo ou d'un bac de douche. Le bon fonctionnement de cette installation nécessite ainsi l'utilisation de la gravité. Par ailleurs, les eaux usées entraînées vers les moyens d'échange de chaleur contiennent souvent des impuretés telles que des films de savons, des cheveux ou des résidus de peaux sèches. Un encrassement accéléré des moyens d'échange de chaleur peut donc intervenir, diminuant ainsi leur capacité d'échange thermique.

WO-A-2007/130029 divulgue un filtre prévu pour être utilisé dans une installation de traitement d'eau de ballast, de refroidissement ou d'eau potable, avec un dispositif de filtration assisté avec du gaz. Le nettoyage de ce filtre est peu efficace. Le filtre divulgué par ce document correspond au préambule de la revendication 3.

Le but de la présente invention est de prévoir une installation de récupération d'énergie calorifique fonctionnelle, plus facile à mettre en oeuvre, ayant moins de contrainte d'implantation, tout en disposant d'un rendement équivalent voire supérieur au rendement calorifique des installations selon l'art antérieur.

A cet effet, l'invention a pour objet un filtre à nettoyage automatique selon la revendication 1, pour une installation dé récupération d'énergie calorifique provenant d'eaux usées.

Grâce au filtre selon la présente invention, un cycle de nettoyage efficace de l'élément filtrant et du filtre lui-même peut être planifié de manière automatisé ou manuelle. De plus, la mise en oeuvre d'une sortie secondaire dans la chambre d'admission permet d'assurer le nettoyage du filtre avec des eaux usées sans devoir utiliser de l'eau potable pour le nettoyage, ce qui contribue au faible impact environnemental de l'installation selon l'invention. Par ailleurs, le fait que, la conception du filtre impliquant un écoulement tangentiel des eaux usées lors du nettoyage du filtre, garantit le parfait décollement des impuretés accumulées sur la face de filtration de l'élément filtrant.

D'autres caractéristiques avantageuses du filtre conforme à l'invention, prises isolément ou selon toutes les combinaisons techniquement possibles, ressortent des revendications 2 à 8.

L'invention a également pour objet une installation de récupération d'énergie calorifique provenant d'eaux usées, selon la revendication 9.

Grâce à l'installation de récupération d'énergie calorifique selon l'invention, l'utilisateur est en mesure de réduire sa facture d'énergie dédiée à la production d'eau chaude, tout en disposant d'un système aisément intégrable sur son lieu d'utilisation. En effet, la mise en oeuvre d'une unité de pompage permet notamment de placer les moyens d'échange de chaleur en hauteur par rapport au niveau d'entrée des eaux usées dans le circuit d'eaux usées.

D'autres caractéristiques avantageuses de l'installation conforme à l'invention, prises isolément ou selon toutes les combinaisons techniquement possibles, ressortent des revendications 16 à 23.

L'invention sera mieux comprise à la lecture de la description qui va suivre, donnée uniquement à titre d'exemple non limitatif et faite en se référant aux dessins sur lesquels :
- la figure 1 représente une vue schématique d'une installation de récupération d'énergie calorifique selon la présente invention, raccordée au circuit d'eau à chauffer et au circuit d'eaux usées;
- la figure 2 est une vue de face d'un filtre à nettoyage automatique selon la présente invention ; et
- la figure 3 est une vue en coupe du filtre selon le plan III représenté à la figure 2.

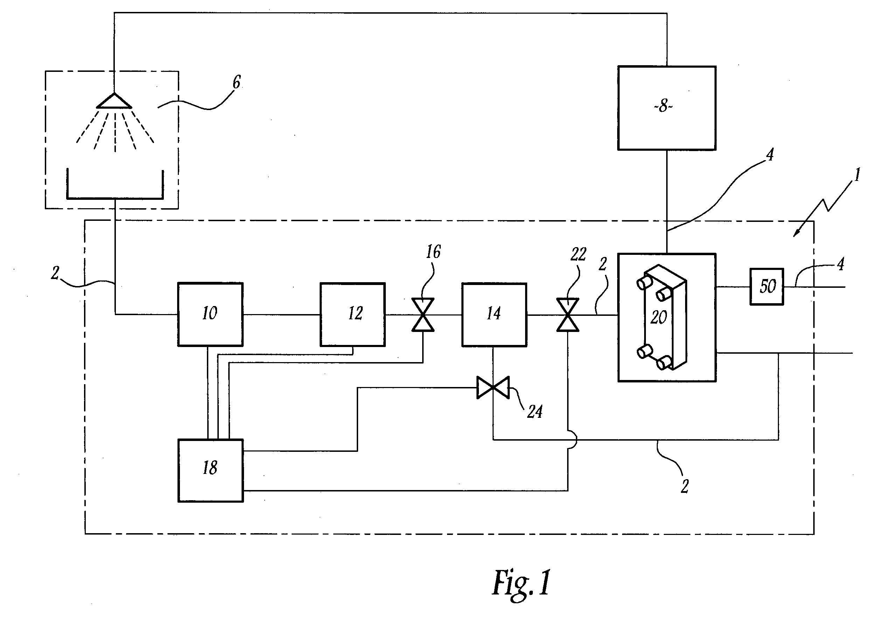

La figure 1 représente une installation 1 de récupération d'énergie calorifique provenant d'eaux usées. L'installation 1 comprend un circuit d'eaux usées 2 ainsi qu'un circuit d'eau propre à chauffer 4. Le circuit d'eau usée est selon l'exemple illustré parfaitement isolé du circuit d'eau propre à chauffer. Le circuit d'eaux usées 2 est raccordé à l'évacuation d'un ensemble 6, adapté pour utiliser l'eau chaude issue du circuit d'eau propre 4.

Les termes « eau propre » sont utilisés dans le cadre de l'invention par opposition aux termes « eaux usées ». Ainsi, l'eau propre désigne au sens de l'invention de l'eau de toute nature appropriée, susceptible d'être chauffée avant son utilisation dans un processus industriel, artisanal ou domestique. L'eau propre peut par exemple être de l'eau sanitaire potable ou non, de l'eau de pluie récupérée ou analogue. Au sens de l'invention, les eaux usées concernent les eaux devant être rejetées à l'égout. Ces eaux usées ne peuvent être réutilisées avant un retraitement.

Dans le cadre d'une application domestique ou artisanale non exclusive, l'eau propre pourra être de l'eau sanitaire potable et l'ensemble 6 pourra être une douche, une baignoire, un lavabo ou des machines telles qu'une machine à laver le linge ou la vaisselle. En d'autres termes, ce type d'ensemble 6 génère des eaux usées faiblement polluées, ces eaux étant généralement qualifiées d'eaux grises par opposition aux eaux noires issues de cabinet d'aisance.

L'ensemble 6 est alimenté par le circuit d'eau propre 4 transitant par un système de chauffage 8, adapté notamment pour chauffer l'eau sanitaire à une température suffisante pour une mise en oeuvre satisfaisante ou confortable de l'ensemble 6.

L'installation 1 comprend en aval de l'ensemble 6 des moyens de détection de présence 10 d'eaux usées dans le circuit 2. L'installation 1 comprend aussi une unité de pompage 12 raccordée au circuit d'eaux usées en aval des moyens de détection 10. L'unité de pompage est adaptée pour refouler les eaux usées vers une unité de filtration 14, raccordée au circuit 2 en aval de l'unité de pompage. La partie du circuit d'eaux usées situé entre l'unité de pompage 12 et l'unité de filtration 14 est en outre commandée par une électrovanne 16. L'unité de pompage 12 comprend au moins une pompe hydraulique qui peut être de tout type adapté. Ainsi, la pompe hydraulique peut être par exemple une pompe centrifuge ou encore une pompe à membrane. L'installation 1 comprend en outre une unité de commande 18 adaptée notamment pour piloter la mise en route de l'unité de pompage en cas de détection de présence d'eaux usées en amont de l'unité de pompage 12 par les moyens de détection 10. Ces moyens peuvent être des capteurs de présence d'eau électromécaniques ou électroniques à électrodes par exemple.

L'unité de filtration 14 est raccordée par une première sortie dite principale au circuit d'eaux usées 2 en amont de moyens d'échange de chaleur 20. L'unité de filtration 14 et les moyens d'échange de chaleur 20 sont séparés par une électrovanne 22 pilotée par l'unité de commande 18. Une deuxième sortie dite secondaire de l'unité de filtration 14 est directement raccordée au circuit d'eaux usées 2 en aval des moyens d'échange de chaleur 20. Une électrovanne 24 commandée par l'unité de commande 18 est disposée à la sortie de l'unité de filtration 14 sur cette portion du circuit d'eaux usées 2.

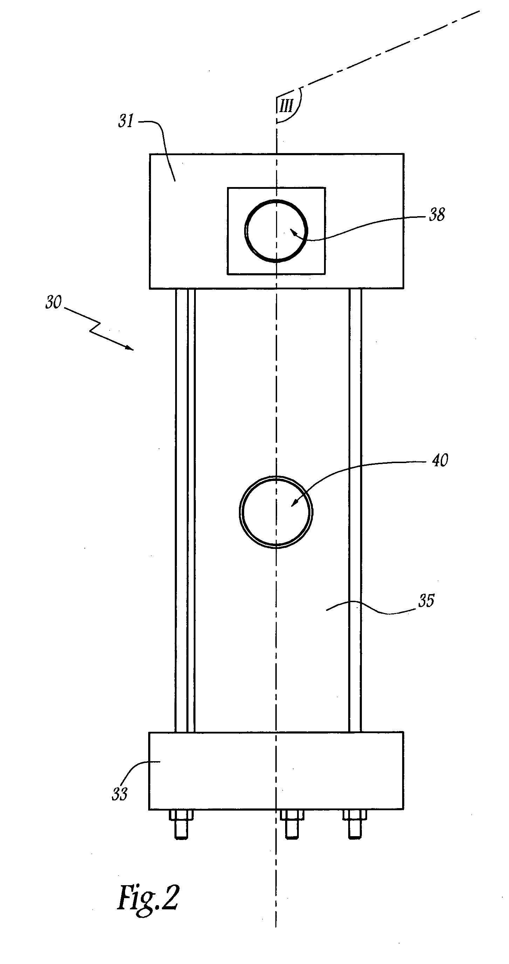

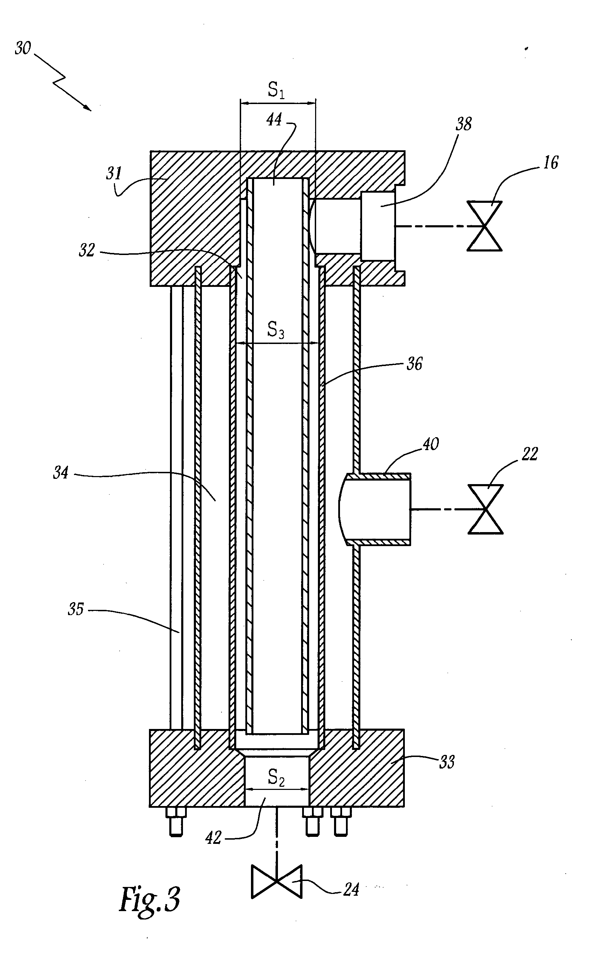

L'unité de filtration 14 comprend au moins un filtre tel qu'un filtre à nettoyage automatique comme représenté sur les figures 2 et 3.

Les moyens d'échange de chaleur 20 comprennent au moins un échangeur à plaques bien connu de l'homme du métier.

En fonctionnement normal ou de récupération de chaleur, les eaux usées chaudes issues de l'ensemble 6 s'écoule dans le circuit d'eaux usées 2 jusqu'aux moyens de détection 10. Une fois la présence des eaux usées détectée, l'unité de commande 18 pilote le fonctionnement de l'unité de pompage 12 pour que celle-ci refoule les eaux usées vers l'unité de filtration 14, de manière à ce que le débit et la pression des eaux usées soient, en aval de l'unité de filtration, et au niveau de l'échangeur, suffisant pour assurer un bon rendement de ce dernier. La présence de l'unité de pompage permet lors de la mise en place de l'installation 1 de s'affranchir de l'obligation de placer l'unité de filtration 14 et les moyens d'échange de chaleur 20 à une hauteur inférieure par rapport à l'ensemble 6. En effet, il n'est pas nécessaire d'utiliser la gravité pour assurer le fonctionnement de l'installation 1 selon l'invention.

Pendant les phases de récupération de chaleur, les vannes 16 et 22 sont ouvertes, de sorte que les eaux usées arrivent aux moyens d'échange de chaleur 20. Au moins un des échangeurs joue alors son rôle en permettant un échange de chaleur provenant des eaux usées s'écoulant dans le circuit 2 au profit de l'eau sanitaire s'écoulant dans le circuit 4. L'eau sanitaire ainsi préchauffée s'écoule alors dans le circuit d'eau sanitaire 4 en direction du système de chauffage 8, adapté pour chauffer l'eau sanitaire à la température de consigne.

Les figures 2 et 3 représentent un filtre à nettoyage automatique 30 selon l'invention comprenant une tête 31 et une embase 33, ces deux éléments pouvant être en matériaux thermoplastiques. Le filtre 30 comprend un corps central 35 de forme sensiblement tubulaire à base circulaire, pouvant être à titre d'exemple en acier inoxydable. Le filtre 30 comprend alors à l'intérieur du corps central 35 une chambre d'admission 32 des eaux usées à filtrer issues du circuit 2, ainsi qu'une chambre d'évacuation 34, séparée de la chambre d'admission par un élément filtrant 36. L'élément filtrant 36 est une cartouche filtrante comprenant une face de filtration orientée vers la chambre d'admission 32. La cartouche filtrante de l'exemple illustré est de forme tubulaire à base sensiblement circulaire et met en oeuvre une maille de type inox ou textile.

Le filtre 30 comprend également une entrée principale 38 des eaux usées aménagée dans la tête 31 et débouchant dans la chambre d'admission 32, ainsi qu'une sortie principale 40 des eaux usées aménagée dans le corps central 35 et débouchant dans la chambre d'évacuation 34. L'entrée 38 est raccordée à l'unité de pompage 12 par une portion du circuit d'eaux usées 2. La sortie principale 40 est raccordée au circuit d'eaux usées 2 en amont des moyens d'échange de chaleur 20. Le filtre 30 comprend en outre une sortie secondaire 42 débouchant dans la chambre d'admission 32 et raccordé au circuit d'eaux usées 2 en aval des moyens d'échange de chaleur 20. Le filtre à nettoyage automatique 30 comprend également un noyau central 44 sensiblement cylindrique à base circulaire, le noyau étant disposé à l'intérieur de l'élément filtrant 36 de manière coaxiale. Ce noyau 44 confère à la chambre d'admission une section droite transversale de forme annulaire. De manière avantageuse, le noyau central 44 pourra être magnétique de manière à retenir les particules métalliques susceptibles d'être présentes dans les eaux usées.

L'entrée principale 38 et la sortie secondaire 42 sont disposées de telle sorte qu'un flux d'eaux usées issues du circuit d'eaux usées 2 allant de l'entrée principale vers la sortie secondaire s'écoule de manière sensiblement tangentielle à la face de filtration de l'élément filtrant 36.

En fonctionnement, dans un mode qualifié de nettoyage automatique du filtre, l'unité de commande 18 pilote la vanne de sortie principale 22 de manière à la placer dans un état fermé. Parallèlement à cette action, l'unité de commande pilote également la vanne de sortie secondaire 24 en la plaçant dans un état ouvert. Ainsi, le flux tangentiel d'eaux usées permet le nettoyage de l'élément filtrant 36 en arrachant notamment les impuretés accrochées à cet élément filtrant. Ce cycle de purge permet également d'éliminer les particules se déposant au fond du filtre 30, au niveau de l'embase 33. L'utilisation de l'unité de pompage 12 permet d'assurer un couple pression/débit suffisant pour décoller efficacement les impuretés agglomérées sur l'élément filtrant 36. On notera que la fonction de nettoyage du filtre est automatique puisqu'elle est pilotée par l'unité de commande 18. L'unité de commande 18 est adaptée pour déclencher un cycle de nettoyage du filtre soit à la demande de l'utilisateur soit de façon programmée par rapport à un intervalle de temps prédéfini soit encore en utilisant un pressostat différentiel déclenchant un cycle de nettoyage du filtre lorsque les pertes de charge entrainées par l'encrassement du filtre sont trop importantes.

De manière à augmenter la qualité du nettoyage de l'élément filtrant 36, il peut être prévu de placer la vanne 16 d'entrée principale 38 dans un état fermé et de faire fonctionner parallèlement l'unité de pompage 12. Pendant une durée prédéfinie qualifiée de mise en pression, les eaux usées sont stoppées au niveau de l'entrée principale du filtre 30 mais exerce une pression sur la vanne 38. Une fois le temps imparti pour la mise en pression écoulé, la vanne 16 d'entrée principale 38 ainsi que la vanne 24 de sortie secondaire 42 sont placées dans un état ouvert. Les eaux usées s'écoulent alors le long de la face de l'élément filtrant 36 avec un débit plus important au moins en début de cycle que dans l'exemple de fonctionnement décrit ci-dessus. L'efficacité de nettoyage automatique est donc augmentée. On peut prévoir pendant ce phénomène de purge le maintien en fonctionnement de l'unité de pompage 12.

En outre, la présence du noyau central 44 accentue encore l'efficacité du nettoyage. En effet, les particules se décollant de la face de filtration sont entraînées plus facilement vers la sortie secondaire 42.

Dans un mode qualifié de filtration, la vanne de sortie principale 40 est placée dans un état ouvert tandis que la vanne de sortie secondaire 42 est placée dans un état fermé. Le flux d'eaux usées peut alors s'écouler en direction des moyens d'échange de chaleur 20. Les eaux usées ainsi filtrées évitent un encrassement des moyens d'échange de chaleur 20.

Par ailleurs, on peut noter que la section de sortie S₁ de l'entrée principale 38 et la section d'entrée S₂ de la sortie secondaire 42 sont sensiblement perpendiculaires à la face de filtration de l'élément filtrant 36. Ainsi, le flux d'eaux usées a tendance à pouvoir s'écouler tangentiellement eu égard à la face de filtration. De plus, l'aire de ces deux sections S₁ et S₂ peut être avantageusement identique. En effet, cela permet d'avoir un débit pour les eaux usées s'écoulant au travers de l'élément filtrant 36 sensiblement constant : la purge est donc plus efficace.

De manière avantageuse, l'aire de la section S₃ de la chambre d'admission 32 perpendiculaire à la face de filtration est sensiblement égale à l'aire de la section d'entrée S₂ de la sortie secondaire 42. L'efficacité de nettoyage automatique du filtre est alors optimisée car les pertes de charge sont ainsi réduites.

On peut également noter que l'aire de la section S₃ de la chambre d'admission 32 peut être avantageusement sensiblement égale à l'aire de la section de sortie S₁ de l'entrée principale 38.

Par ailleurs, on peut prévoir un châssis supportant à la fois l'unité de filtration 14 et les moyens d'échange de chaleur 20. Ce châssis peut également porter l'unité de pompage 12.

A titre d'alternative, il peut être prévu une unité de filtration comprenant une pluralité de filtres dont au moins un des filtres est un filtre à nettoyage automatique 30. On peut envisager de raccorder ces filtres en série et/ou en parallèle. De la même manière, l'unité de pompage peut comprendre une pluralité de pompes hydrauliques. Les moyens d'échange de chaleur peuvent comprendre plusieurs échangeurs à plaques.

A titre d'alternative, on peut également prévoir des filtres à nettoyage automatique comprenant une sortie principale orientable. En d'autres termes, la sortie principale et l'entrée principale ne sont pas nécessairement dans le même plan.

Selon une variante de réalisation, l'installation 1 conforme à l'invention comprend des moyens 50 de protection contre le calcaire placés sur le circuit d'eau propre 4 en amont de l'échangeur 20.

Les moyens de protection contre le calcaire peuvent être réalisés de toute manière appropriée et par exemple comprendre un adoucisseur à résine active. Les moyens de protection 50 peuvent également comprendre un dispositif GEMKA, tel qu'exposé dans la demande de brevet WO-98 06491.

La mise en oeuvre de tels moyens de protection 50 peuvent d'une part protéger le circuit d'eau propre et les appareils qui le composent en amont des moyens 50, mais également le circuit d'eaux usées véhiculant l'eau en provenance du circuit d'eau propre. Ainsi, la mise en oeuvre des moyens de protection contre le calcaire permet d'éviter ou de limiter le dépôt de calcaire tant dans la partie eau propre que dans la partie eaux usées de l'échangeur 20 et donc en préserver le rendement.

L'invention n'est pas limitée à la récupération d'énergie calorifique positive. Elle s'applique également dans le cadre de récupération d'énergie calorifique négative. Plus précisément, on récupère des frigories issues des eaux usées, ces frigories servant à refroidir l'eau propre.

L'installation décrite est applicable dans le cadre de processus sanitaires domestiques, professionnels tels que pour les salons de coiffure, les laveries ou les restaurants, ainsi que pour les processus industriels.

## Revendications

1. Filtre à nettoyage automatique (30) pour une installation (1) dé récupération d'énergie calorifique provenant d'eaux usées, cette installation comprenant au moins :
- un circuit d'eaux usées (2),
- un circuit d'eau propre (4),
- une unité de pompage (12) qui comprend au moins une pompe hydraulique et qui est raccordée au circuit d'eaux usées,
- une unité de filtration (14) qui comprend au moins un filtré (30) et qui est raccordée au circuit d'eaux usées en aval de l'unité de pompage,
- des moyens d'échange de chaleur (20) raccordés, d'une part, au circuit d'eaux usées en aval de l'unité de filtration et, d'autre part, au circuit d'eau propre, et
- une unité de commande (18) adaptée pour au moins piloter le fonctionnement de l'unité de pompage,
ce filtre comprenant :
- une chambre d'admission (32) des eaux usées à filtrer,
- une chambre d'évacuation (34) des eaux usées filtrées,
- un élément filtrant (36) séparant la chambre d'admission de la chambre d'évacuation et comprenant une face de filtration orientée vers la chambre d'admission,
- une entrée principale (38) des eaux usées débouchant dans la chambre d'admission, et
- une sortie principale (40) des eaux usées débouchant dans la chambre d'évacuation et étant raccordée au circuit d'eaux usées (2) en amont des moyens d'échange de chaleur (20),
- une sortie secondaire (42) des eaux usées débouchant dans la chambre d'admission (32) et étant raccordée au circuit d'eaux usées (2) en aval des moyens d'échange de chaleur (20), l'entrée principale (38) et la sortie secondaire étant adaptées pour qu'u n flux d'eaux usées allant de l'entrée principale à la sortie secondaire s'écoule sensiblement tangentiellement à la face de filtration de l'élément filtrant (36) et **caractérisé en ce que** un filtre comprend
- un noyau central (44) sensiblement cylindrique disposé à l'intérieur de l'élément filtrant (36) de manière coaxiale, la chambre d'admission (32) présentant une section droite transversale sensiblement annulaire.

2. Filtre selon la revendication 1, caractérisé en ce qu"il comprend :
- une vanne de sortie principale (22), située au niveau de la sortie principale (42) et adaptée pour être pilotée par une unité de commande (18), et
- une vanne de sortie secondaire (24), située au niveau de la sortie secondaire (42) et adaptée pour être pilotée par l'unité de commande.

3. Filtre selon la revendication 1 ou 2, **caractérisé en ce qu'**il comprend une vanne d'entrée principale (16) située au niveau de l'entrée principale (38) et pilotée par l'unité de commande (18).

4. Filtre selon l'une quelconque des revendications 1 à 3, **caractérisé en ce que** la section de sortie (S₁) de l'entrée principale (38) et la section d'entrée (S₂) de la sortie secondaire (42) sont sensiblement perpendiculaires à la face de filtration de l'élément filtrant (36).

5. Filtre selon l'une quelconque des revendications 1 à 4, **caractérisé en ce que** la section de sortie (S₁) de l'entrée principale (38) et la section d'entrée (S₁) de la sortie secondaire (42) possèdent des aires sensiblement identiques.

6. Filtre selon l'une quelconque des revendications 1 à 5, **caractérisé en ce que** l'aire de la section (S₃) de la chambre d'admission (32), perpendiculaire à la face de filtration, est sensiblement égale à l'aire de la section d'entrée (S₂) de la sortie secondaire (42) et/ou à l'aire de la section de sortie (S₁) de l'entrée principale (38).

7. Filtre selon l'une quelconque des revendications 1 à 6, **caractérisé en ce que** l'élément filtrant (36) possède une forme droite tubulaire, la chambre d'admission (32) étant au moins en partie située à l'intérieur de l'élément filtrant.

8. Filtre selon l'une des revendications 1 à 7, **caractérisé en ce qu'**il comprend des moyens d'échange de chaleur (20) raccordé à la sortie principale (22).

9. Installation (1) de récupération d'énergie calorifique provenant d'eaux usées, comprenant au moins :
- un circuit d'eaux usées (2),
- un circuit d'eau propre (4),
- une unité de pompage (12) qui comprend au moins une pompe hydraulique et qui est raccordée au circuit d'eaux usées,
- une unité de filtration (14) qui comprend au moins un filtre (30) et qui est raccordée au circuit d'eaux usées en aval de l'unité de pompage,
- des moyens d'échange de chaleur (20) raccordés, d'une part, au circuit d'eaux usées en aval de l'unité de filtration et, d'autre part, au circuit d'eau propre, et
- une unité de commande (18) adaptée pour au moins piloter le fonctionnement de l'unité de pompage
**caractérisée en ce que** l'unité de filtration (1) comprend au moins un filtre à nettoyage automatique (30) selon l'une des revendications précédentes.

10. Installation selon la revendication 9, **caractérisée en ce que** les moyens d'échange de chaleur comprennent au moins un échangeur à plaques.

11. Installation selon la revendication 9 ou 10, **caractérisée en ce qu'**elle comprend des moyens de détection (10) de présence d'eaux usées dans le circuit d'eaux usées (2) en amont de l'unité de pompage (12) et **en ce que** l'unité de commande (18) est adaptée pour piloter le fonctionnement de l'unité de pompage en cas de présence d'eaux usées.

12. Installation selon l'une des revendications 9 à 11, **caractérisée en ce que** l'unité de filtration (14) comprend au moins un filtre (30) à nettoyage automatique et **en ce que** l'unité de commande (18) est adaptée pour déclencher un cycle de nettoyage du fi tre à nettoyage automatique.

13. Installation selon l'une des revendications 9 à 12, **caractérisée en ce que** l'unité de filtration (14) comprend, outre le filtre à nettoyage automatique (30),
- au moins une vanne de sortie principale (22), située au niveau de la sortie principale et pilotée par l'unité de commande (18), et
- au moins une vanne de sortie secondaire (24), située au niveau de la sortie secondaire et pilotée par l'unité de commande,
et **en ce que** l'unité de commande est adaptée pour, d'une part, dans un mode de filtration, placer dans un état ouvert la vanne de sortie principale et dans un état fermé la vanne de sortie secondaire et, d'autre part, dans un mode de nettoyage du filtre, placer dans un état fermé la vanne de sortie principale et dans un état ouvert la vanne de sortie secondaire.

14. Installation selon la revendication 13, **caractérisé en ce que** l'unité de filtration (14) comprend une vanne d'entrée principale (16) située au niveau de l'entrée principale (38) et pilotée par l'unité de commande (18).

15. Installation selon la revendication 14, **caractérisée en ce que en ce que** l'unité de commande (18) est adaptée pour:
- en mode de filtration, placer la vanne d'entrée principale (16) dans un état ouvert, et
- en mode de nettoyage :
- pendant une durée prédéfinie dite de mise en pression, placer la vanne d'entrée principale et/ou la vanne de sortie secondaire (24) dans un état fermé et faire fonctionner l'unité de pompage (12),
- à l'expiration de la durée prédéfinie de mise en pression, placer la vanne d'entrée principale et la vanne de sortie secondaire dans un état ouvert tout en maintenant le fonctionnement de l'unité de pompage (12).

16. Installation selon l'une des revendications 13 à 15, **caractérisée en ce que** la section de sortie (S₁) de l'entrée principale (38) et la section d'entrée (S₂) de la sortie secondaire (42) sont sensiblement perpendiculaires à la face de filtration de l'élément filtrant (36).

17. Installation selon l'une des revendications 13 à 16, **caractérisée en ce que** la section de sortie (S₁) de l'entrée principale (38) et la section d'entrée (S₂) de la sortie secondaire (42) possèdent des aires sensiblement identiques.

18. Installation selon l'une des revendications 13 à 17, **caractérisée en ce que** l'aire de la section (S3) de la chambre d'admission, (32) perpendiculaire à la face de filtration, est sensiblement égale à l'aire de la section d'entrée (S₂) de la sortie secondaire (42) et/ou à l'aire de la section de sortie (S₁) de l'entrée principale (38).

19. Installation selon l'une des revendications 13 à 18, **caractérisée en ce que** l'élément filtrant (36) possède une forme droite tubulaire, la chambre d'admission (32) étant au moins en partie située à l'intérieur de l'élément filtrant.

20. Installation selon l'une quelconque des revendications 9 à 19, **caractérisée en ce qu'**elle comprend un châssis portant à la fois l'unité de filtration (14) et les moyens d'échange de chaleur (20).

21. Installation selon la revendication 20, **caractérisée en ce que** le châssis porte également l'unité de pompage (12).

22. Installation selon l'une quelconque des revendications 9 à 21, **caractérisée en ce qu'**elle comprend des moyens (50) de protection contre le calcaire disposés sur le circuit d'eau propre (4) en amont des moyens d'échange de chaleur (20).

23. Installation selon l'une des revendications 9 à 22, **caractérisée en ce que** le noyau central (44) du filtre (30) est magnétique, de manière à retenir les particules magnétiques susceptibles d'être présentes dans les eaux usées.

## Patentansprüche

1. Filter zur automatischen Reinigung (30) für eine Anlage (1) zur Rückgewinnung von Wärmeenergie aus Abwasser, wobei die Anlage mindestens aufweist:
- einen Abwasserkreislauf (2),
- einen Frischwasserkreislauf (4),
- eine Pumpeinheit (12), die mindestens eine hydraulische Pumpe aufweist und die an den Abwasserkreislauf angeschlossen ist,
- eine Filtereinheit (14), die mindestens einen Filter (30) aufweist und die an den Abwasserkreislauf stromabwärts zu der Pumpeinheit angeschlossen ist,
- Wärmetauschmittel (20), die einerseits an den Abwasserkreislauf stromabwärts zu der Filtereinheit angeschlossen sind und andererseits an den Frischwasserkreislauf angeschlossen sind und
- eine Steuereinheit (18), die eingerichtet ist, zumindest die Funktion der Pumpeinheit zu steuern,
wobei der Filter aufweist:
- eine Einlasskammer (34) des zu filternden Abwassers,
- eine Abflusskammer (34) des gefilterten Abwassers,
- ein Filterelement (36), das die Einlasskammer von der Abflusskammer trennt und eine Filterfläche aufweist, die zur Einlasskammer (34) hin orientiert ist,
- einen Haupteingang (38) für Abwasser, der in die Einlasskammer mündet und
- einen Hauptausgang (40) für Abwasser, der in die Abflusskammer mündet und an den Abwasserkreislauf (2) stromaufwärts zu den Wärmetauschmitteln (20) angeschlossen ist,
- einen Sekundärausgang (42) für Abwasser, der in die Einlasskammer (32) mündet und an den Abwasserkreislauf (2) stromabwärts zu den Wärmetauschmitteln (20) angeschlossen ist, wobei der Haupteingang (38) und der Sekundärausgang (42) derart eingerichtet sind, dass ein Fluss von Abwasser, der von dem Haupteingang zum Sekundärausgang fließt, im Wesentlichen tangential zur Filterfläche des Filterelements (36) verläuft, und dadurch charakterisiert, dass der Filter aufweist
- einen im Wesentlichen zylindrischen zentralen Kern (44), der im Inneren des Filterelements (36) koaxial angeordnet ist, wobei die Einlasskammer (32) einen im Wesentlichen ringförmigen geraden Querschnitt hat.

2. Filter gemäß Anspruch 1, dadurch charakterisiert, dass er aufweist:
- ein Hauptausgangsventil (22), das sich auf der Höhe des Hauptausgangs (42) befindet und eingerichtet ist, von einer Steuereinheit (18) gesteuert zu werden und
- ein Sekundärausgangsventil (24), das sich auf der Höhe des Sekundärausgangs (42) befindet und eingerichtet ist, von der Steuereinheit gesteuert zu werden.

3. Filter gemäß Anspruch 1 oder 2, dadurch charakterisiert, dass er ein Haupteingangsventil (16) aufweist, das sich auf der Höhe des Haupteingangs (38) befindet und eingerichtet ist, von der Steuereinheit (18) gesteuert zu werden.

4. Filter gemäß einem der Ansprüche 1 bis 3, dadurch charakterisiert, dass der Ausgangsquerschnitt (S₁) des Haupteingangs (38) und der Eingangsquerschnitt (S₂) des Sekundärausgangs (42) im Wesentlichen senkrecht zur Filterfläche des Filterelements (36) sind.

5. Filter gemäß einem der Ansprüche 1 bis 4, dadurch charakterisiert, dass der Ausgangsquerschnitt (S₁) des Haupteingangs (38) und der Eingangsquerschnitt (S₁) des Sekundärausgangs (42) im Wesentlichen gleiche Flächeninhalte haben.

6. Filter gemäß einem der Ansprüche 1 bis 5, dadurch charakterisiert, dass der Flächeninhalt des Querschnitts (S₃) der Einlasskammer (32), der senkrecht zu der Filterfläche ist, im Wesentlichen gleich dem Flächeninhalt des Eingangsquerschnitts (S₂) des Sekundärausgangs (42) und/oder dem Flächeninhalt des Ausgangsquerschnitts (S₁) des Haupteingangs (38) ist.

7. Filter gemäß einem der Ansprüche 1 bis 6, dadurch charakterisiert, dass das Filterelement (36) eine gerade Röhrenform hat, wobei die Einlasskammer (32) sich zumindest teilweise im Inneren des Filterelements befindet.

8. Filter gemäß einem der Ansprüche 1 bis 7, dadurch charakterisiert, dass er Wärmetauschmittel (20) aufweist, die an den Hauptausgang (22) angeschlossen sind.

9. Anlage (1) zur Rückgewinnung von Wärmeenergie aus Abwasser, mindestens aufweisend:
- einen Abwasserkreislauf (2),
- einen Frischwasserkreislauf (4),
- eine Pumpeinheit (12), die mindestens eine hydraulische Pumpe aufweist und die an den Abwasserkreislauf angeschlossen ist,
- eine Filtereinheit (14), die mindestens einen Filter (30) aufweist und die an den Abwasserkreislauf stromabwärts zur der Pumpeinheit angeschlossen ist,
- Wärmetauschmittel (20), die einerseits an den Abwasserkreislauf stromabwärts zu der Filtereinheit angeschlossen sind und andererseits an den Frischwasserkreislauf angeschlossen sind und
- eine Steuereinheit (18), die eingerichtet ist, zumindest die Funktion der Pumpeinheit zu steuern,
dadurch charakterisiert, dass die Filtereinheit (1) mindestens einen Filter zur automatischen Reinigung gemäß einem der vorhergehenden Ansprüche aufweist.

10. Anlage gemäß Anspruch 9, dadurch charakterisiert, dass die Wärmetauschmittel mindestens einen Plattenwärmetauscher aufweist.

11. Anlage gemäß Anspruch 9 oder 10, dadurch charakterisiert, dass sie Mittel zur Detektion (10) der Präsenz von Abwasser in dem Abwasserkreislauf (2) stromaufwärts zu der Pumpeinheit (12) aufweist und dadurch, dass die Steuereinheit (18) eingerichtet ist, die Pumpeinheit im Fall der Präsenz von Abwasser zu steuern.

12. Anlage gemäß einem der Ansprüche 9 bis 11, dadurch charakterisiert, dass die Filtereinheit (14) mindestens einen Filter zur automatischen Reinigung aufweist und dadurch, dass die Steuereinheit (18) eingerichtet ist, einen Reinigungszyklus des Filters zur automatischen Reinigung auszulösen.

13. Anlage gemäß einem der Ansprüche 9 bis 12, dadurch charakterisiert, dass die Filtereinheit (14) aufweist, außer dem Filter zur automatischen Reinigung (30),
- mindestens ein Hauptausgangsventil (22), das sich auf der Höhe des Hauptausgangs (42) befindet und von der Steuereinheit (18) gesteuert wird und
- mindestens ein Sekundärausgangsventil (24), das sich auf der Höhe des Sekundärausgangs befindet und von der Steuereinheit gesteuert wird,
und dadurch, dass die Steuereinheit einerseits eingerichtet ist, in einem Filtermodus das Ventil des Hauptausgangs in einen offenen Zustand zu versetzen und das Ventil des Sekundärausgangs in einen geschlossenen Zustand zu versetzen und andererseits eingerichtet ist, in einem Modus zur Reinigung des Filters das Ventil des Hauptausgangs in einen geschlossenen Zustand zu versetzen und das Ventil des Sekundärausgangs in einen offenen Zustand zu versetzen.

14. Anlage gemäß Anspruch 13, dadurch charakterisiert, dass die Filtereinheit (14) ein Haupteingangsventil (16) aufweist, das sich auf der Höhe des Haupteingangs (38) befindet und von der Steuereinheit (18) gesteuert wird.

15. Anlage gemäß Anspruch 14, dadurch charakterisiert, dass die Steuereinheit (18) eingerichtet ist:
- im Filtermodus das Haupteingangsventil (16) in einen offenen Zustand zu versetzen und
- im Modus zur Reinigung:
- während einer vordefinierten sogenannten Unter-Druck-Versetz-Dauer das Haupteingangsventil und/oder das Sekundärausgangsventil (24) in einen geschlossenen Zustand zu versetzen und die Pumpeinheit (12) zu betreiben,
- am Ende der vordefinierten Unter-Druck-Versetz-Dauer das Haupteingangsventil und das Sekundärausgangsventil in einen offenen Zustand zu versetzen, bei all dem den Betrieb der Pumpeinheit (12) beibehaltend.

16. Anlage gemäß einem der Ansprüche 13 bis 15, dadurch charakterisiert, dass der Ausgangsquerschnitt (S₁) des Haupteingangs (38) und der Eingangsquerschnitt (S₂) des Sekundärausgangs (42) im Wesentlichen senkrecht zur Filterfläche des Filterelements (36) sind.

17. Anlage gemäß einem der Ansprüche 13 bis 16, dadurch charakterisiert, dass der Ausgangsquerschnitt (S₁) des Haupteingangs (38) und der Eingangsquerschnitt (S₁) des Sekundärausgangs (42) im Wesentlichen gleiche Flächeninhalte haben.

18. Anlage gemäß einem der Ansprüche 13 bis 17, dadurch charakterisiert, dass der Flächeninhalt des Querschnitts (S₃) der Einlasskammer (32), der senkrecht zu der Filterfläche ist, im Wesentlichen gleich dem Flächeninhalt des Eingangsquerschnitts (S₂) des Sekundärausgangs (42) und/oder dem Flächeninhalt des Ausgangsquerschnitts (S₁) des Haupteingangs (38) ist.

19. Anlage gemäß einem der Ansprüche 13 bis 18, dadurch charakterisiert, dass das Filterelement (36) eine gerade Röhrenform hat, wobei die Einlasskammer (32) sich zumindest teilweise im Inneren des Filterelements befindet.

20. Anlage gemäß einem der Ansprüche 9 bis 19, dadurch charakterisiert, dass sie ein Gehäuse aufweist, das zugleich die Filtereinheit (14) und die Wärmetauschmittel (20) enthält.

21. Anlage gemäß Anspruch 20, dadurch charakterisiert, dass das Gehäuse auch die Pumpeinheit (12) enthält.

22. Anlage gemäß einem der Ansprüche 9 bis 21, dadurch charakterisiert, dass sie Mittel (50) zum Schützen gegen Kalk aufweist, die auf dem Frischwasserkreislauf (4) stromaufwärts zu den Wärmetauschmitteln (20) angeordnet sind.

23. Anlage gemäß einem der Ansprüche 9 bis 22, dadurch charakterisiert, dass der zentrale Kern (44) des Filters (30) magnetisch ist, derart, dass die magnetischen Teilchen, die möglicherweise im Abwasser enthalten sind, zurückgehalten werden.

## Claims

1. Automatic cleaning filter (30) for a waste water heat recovery plant (1), wherein this plant comprises at least:
• a waste water circuit (2),
• a clean water circuit (4),
• a pumping unit (12), which comprises at least one hydraulic pump and which is connected to the waste water circuit,
• a filtration unit (14), which comprises at least one filter (30) and which is connected to the waste water circuit downstream of the pumping unit,
• heat exchanger devices (20) connected to the waste water circuit downstream of the filtration unit on one side and to the clean water circuit on the other side, and
• a control unit (18) fitted to at least control the operation of the pumping unit,
wherein this filter comprises:
• an inlet chamber (32) for the waste water to be filtered,
• an outlet chamber (34) for the waste water to be filtered,
• a filtering element (36) separating the inlet chamber from the outlet chamber and comprising a filtration surface oriented towards the inlet chamber,
• a main inlet (38) for waste water discharging into the inlet chamber and
• a main outlet (40) for waste water discharging into the outlet chamber and connected to the waste water circuit (2) upstream of the heat exchanger devices (20),
• a secondary outlet (42) for waste water discharging into the inlet chamber (32) and connected to the waste water circuit (2) downstream of the heat exchanger devices (20), wherein the main inlet (38) and the secondary outlet are fitted so that a flux of waste water moving from the main inlet to the secondary outlet flows substantially tangentially to the filtration surface of the filtering element (36), and **characterised in that** this filter comprises
• a substantially cylindrical central core (44) arranged coaxially inside the filtering element (36), wherein the inlet chamber (32) has a substantially annular cross-section.

2. Filter according to claim 1, **characterised in that** it comprises:
• a main outlet valve (22) located at the level of the main outlet (42) and fitted to be controlled by a control unit (18) and
• a secondary outlet valve (24) located at the level of the secondary outlet (42) and fitted to be controlled by the control unit.

3. Filter according to claim 1 or 2, **characterised in that** it comprises a main inlet valve (16) located at the level of the main inlet (38) and controlled by the control unit (18).

4. Filter according to any one of claims 1 to 3, **characterised in that** the outlet section (S₁) of the main inlet (38) and the inlet section (S₂) of the secondary outlet (42) are substantially perpendicular to the filtration surface of the filtering element (36).

5. Filter according to any one of claims 1 to 4, **characterised in that** the outlet section (S₁) of the main inlet (38) and the inlet section (S₁) of the secondary outlet (42) have substantially identical areas.

6. Filter according to any one of claims 1 to 5, **characterised in that** the area of the section (S₃) of the inlet chamber (32) that is perpendicular to the filtration surface is substantially equal to the area of the inlet section (S₂) of the secondary outlet (42) and/or to the area of the outlet section (S₁) of the main inlet (38).

7. Filter according to any one of claims 1 to 6, **characterised in that** the filtering element (36) has a straight tubular shape, wherein the inlet chamber (32) is located at least partially inside the filtering element.

8. Filter according to one of claims 1 to 7, **characterised in that** it comprises heat exchanger devices (20) connected to the main outlet (22).

9. Waste water heat recovery plant (1) comprising at least:
• a waste water circuit (2),
• a clean water circuit (4),
• a pumping unit (12), which comprises at least one hydraulic pump and which is connected to the waste water circuit,
• a filtration unit (14), which comprises at least one filter (30) and which is connected to the waste water circuit downstream of the pumping unit,
• heat exchanger devices (20) connected to the waste water circuit downstream of the filtration unit on one side and to the clean water circuit on the other side, and
• a control unit (18) fitted to at least control the operation of the pumping unit, **characterised in that** the filtration unit (1) comprises at least one automatic cleaning filter (30) according to one of the preceding claims.

10. Plant according to claim 9, **characterised in that** the heat exchanger devices comprise at least one plate heat exchanger.

11. Plant according to claim 9 or 10, **characterised in that** it comprises devices (10) for detecting the presence of waste water in the waste water circuit (2) upstream of the pumping unit (12), and **in that** the control unit (18) is fitted to control the operation of the pumping unit when waste water is present.

12. Plant according to one of claims 9 to 11, **characterised in that** the filtration unit (14) comprises at least one automatic cleaning filter (30), and **in that** the control unit (18) is fitted to activate a cleaning cycle of the automatic cleaning filter.

13. Plant according to one of claims 9 to 12, **characterised in that** besides the automatic cleaning filter (30) the filtration unit (14) comprises
• at least one main outlet valve (22) located at the level of the main outlet and controlled by the control unit (18) and
• at least one secondary outlet valve (24) located at the level of the secondary outlet and controlled by the control unit,
and **in that** the control unit is fitted to place the main outlet valve in an open state and the second outlet valve in a closed state in a filtration mode, on the one hand, and to place the main outlet valve in a closed state and the secondary outlet valve in an open state in a cleaning mode of the filter, on the other hand.

14. Plant according to claim 13, **characterised in that** the filtration unit (14) comprises a main inlet valve (16) located at the level of the main inlet (38) and controlled by the control unit (18).

15. Plant according to claim 14, **characterised in that** the control unit (18) is fitted to
• place the main inlet valve (16) in an open state in the filtration mode, and
• in the cleaning mode:
o for a predefined period, referred to as pressurisation period, place the main inlet valve and/or the secondary outlet valve (24) in a closed state and set the pumping unit (12) in operation,
o when the predefined pressurisation period has elapsed, place the main inlet valve and the secondary outlet valve in an open state while maintaining the operation of the pumping unit (12).

16. Plant according to one of claims 13 to 15, **characterised in that** the outlet section (S₁) of the main inlet (38) and the inlet section (S₂) of the secondary outlet (42) are substantially perpendicular to the filtration surface of the filtering element (36).

17. Plant according to one of claims 13 to 16, **characterised in that** the outlet section (S₁) of the main inlet (38) and the inlet section (S₂) of the secondary outlet (42) have substantially identical areas.

18. Plant according to one of claims 13 to 17, **characterised in that** the area of the section (S₃) of the inlet chamber (32) that is perpendicular to the filtration surface is substantially equal to the area of the inlet section (S₂) of the secondary outlet (42) and/or to the area of the outlet section (S₁) of the main inlet (38).

19. Plant according to any one of claims 13 to 18, **characterised in that** the filtering element (36) has a straight tubular shape, wherein the inlet chamber (32) is located at least partially inside the filtering element.

20. Plant according to any one of claims 9 to 19, **characterised in that** it comprises a frame supporting both the filtration unit (14) and the heat exchanger devices (20).

21. Plant according to claim 20, **characterised in that** the frame also supports the pumping unit (12).

22. Plant according to any one of claims 9 to 21, **characterised in that** it comprises devices (50) for protecting against the calcium deposited on the clean water circuit (4) upstream of the heat exchanger devices (20).

23. Plant according to one of claims 9 to 22, **characterised in that** the central core (44) of the filter (30) is magnetic in order to retain magnetic particles likely to be present in the waste water.
